# EUROPEAN PATENT SPECIFICATION

(11) **EP 1 437 903 B1**
(45) Date of publication and mention of the grant of the patent: **15.07.2009**
(21) Application number: 03258204.1
(22) Date of filing: 23.12.2003
(51) Int. Cl.: H04W 4/02

(54) **Cellular phone managing a printer configuration using an SMS message**
Verwaltung einer Druckerkonfiguration durch ein Mobiltelefon mittels einer SMS Nachricht
Téléphone portable gerant la configuration d'une imprimante à l'aide d'un message court SMS

(30) Priority: 13.01.2003 US 341014
(43) Date of publication of application: 14.07.2004
(73) Proprietor: HEWLETT-PACKARD DEVELOPMENT COMPANY, L.P., Houston, TX 77070 (US)
(72) Inventor: Biundo, Marc C., Vancouver, WA 98682 (US)
(74) Representative: Durville, Guillaume

(56) References cited:
- EP-A- 1 017 210
- EP-A- 1 220 555
- WO-A-99/22493

## Description

### TECHNICAL FIELD

The present disclosure relates to cellular phone printing, and more particularly, configuring cell phones to print to printers.

### BACKGROUND

Mobile or cellular phones (cellular phones) increasingly are becoming smaller in size and continue to provide greater features that enable users to become more productive. Cellular phones are becoming more than devices to carry on voice communication. In addition to voice communication, text communication is widely made available and used for many cellular phones.

The inherently small screen provided on most cellular phones is often marginally acceptable in displaying a text message. This is particularly the case when long text message are displayed. Short one or two sentence text messages on a cellular phone screen are acceptable, but when longer documents are sent to a cellular phone, it is difficult to read such documents. Further, a cellular phone screen may not be configured properly (i.e., have the requisite pixels) to properly show graphics, particularly complicated detailed graphics. In addition, a cellular phone's memory (storage) may be insufficient to store long and/or complicated messages to be displayed at a later time.

To alleviate the resource shortcomings of a cellular phone and accommodate for long and/or complicated text (graphics) messages, provision to print messages is provided for many cellular phones. A cellular phone may be configured to print to a specific printer located on a specific network. Printing also provides the advantages of allowing a cell phone user to print a hard copy record of phone calls made; print cell phone configuration; and print out data in cell phone memory.

Most printers are stationary devices that are tied to particular networks, while cellular phones by design provide mobility for a user. Unless the printer configuration on a cellular phone is changed, the cellular phone will only be able to print to a particular printer. This setup is acceptable if the cellular phone user only desires to print to that particular printer. Cellular phone users and cellular phones, however, travel from the particular printer and find the need to print to another printer.

Cellular phone configurations may include the following: "printer name," "printer address," "printer location," and other unique printer feature fields. A cellular phone may be able to store different printer configurations, allowing a user to select from various printers; however, storing a number of configurations takes up memory resources in a cellular phone. Often times, a cellular phone user will be at a new location where it is unknown what if any printers are available for use.

A cellular phone may be connected to a network and have the printer configuration downloaded from the network; however, this requires a user to attach the cellular phone to a cradle or similar interface and connect to an access point such as a website in order to download the necessary information.

In certain situations, the user knows the printer information that is needed to reconfigure the cellular phone to print to a different printer. The small screen and keys on the cellular phone, however, make it difficult for the user to enter all the necessary printer information.

WO 99/22493 A2 discloses a server device with a built-in mobile station for connecting a local area network to a mobile communication network and routing data between the local area network and the mobile communication network

EP 1017210 A1 describes a mobile receiving terminal which communicates directly with a suitable terminal for outputting a received call. The address of the suitable terminal is passed to the receiving terminal by a terminal selecting arrangement.

Accordingly, this invention arose out of concerns associated with providing the ability to configure or reconfigure cellular phones to print to different printers with minimal intervention by a user.

### SUMMARY

A method and a system for configuring a cellular phone to print to a printer are described according to independent claims 1 and 2. In an implementation, a cellular phone receives a message that includes printer information to print to a printer. A short message system can be used to transmit the message to the cellular phone. The printer information is processed and stored in printer configuration memory in the cellular phone. The cellular phone can be designed to automatically configure the appropriate memory locations according to the received printing information, or enable the user to copy the printing information to the appropriate memory locations.

### BRIEF DESCRIPTION OF THE DRAWINGS

The same reference numbers are used throughout the drawings to reference like components and features.
Fig. 1 is a schematic illustrating an exemplary cellular phone suitable for implementing various methods that configure the cellular phone for printing.
Fig. 2 is a block diagram illustrating an exemplary environment for passing a configuration message to a cellular phone.
Fig. 3 is a block diagram illustrating an exemplary wireless network that allows a cellular phone to print to printer.
Fig. 4 is a flowchart illustrating an exemplary method of configuring a cellular phone to print to a particular printer.

### DETAILED DESCRIPTION

### Overview

The following discussion is directed to a system and methods for configuring a cellular phone to print to a particular printer. A cellular phone receives a text message from a service, such as a short message service (SMS). The text message informs the user that a different printer may be available for printing. The message may include the necessary printer information to configure the cellular phone to print to the particular printer.

### Exemplary Cellular Phone

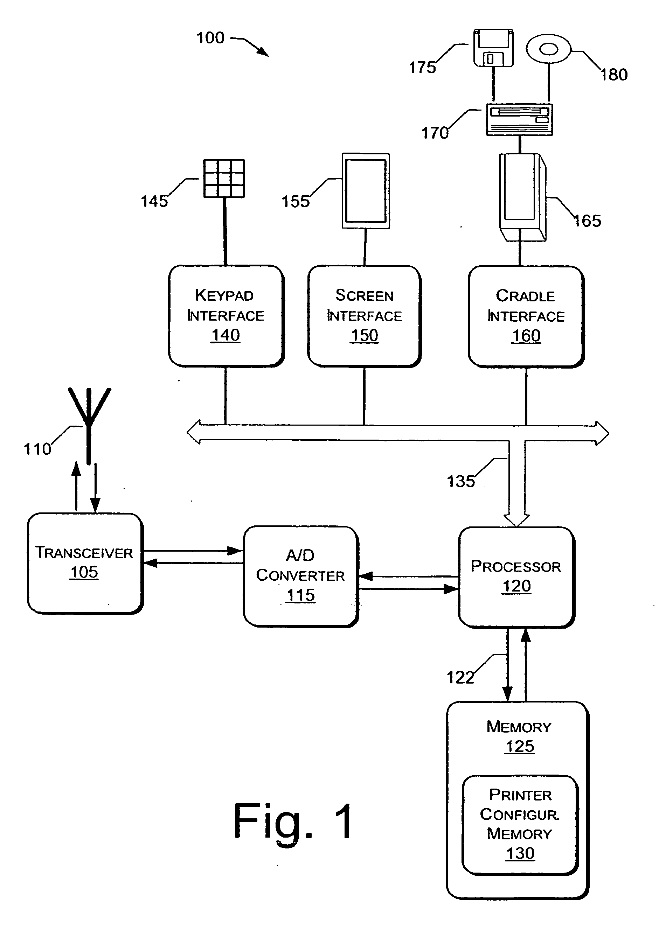

Fig. 1 shows an exemplary architecture of a cellular phone 100 suitable for implementing various methods that configure to print to different printers. The exemplary architecture of cellular phone 100 may implement one of various cellular phone protocols and networks including analog and digital networks, and may employ one or various standards such as time division multiple access (TDMA), code division multiple access (CDMA), and global system for mobile communication (GSM).

The architecture of cellular phone 100 includes a transceiver 105 coupled to an antenna 110. Transceiver 105 is configured through hardware, software, or a combination to receive and transmit messages in the form of radio frequency (RF) signals. RF signal messages received by transceiver 105 are sent to and processed by analog to digital (A/D) converter 115. A/D converter 115 converts the RF signal messages to digital information and provides the digital information to processor 120. A/D converter 115 may also provide compressing and recompression of the digital information to save bandwidth space in transmission. Processor 120 is configured through hardware, software, or a combination to handle information received from A/D converter 115 and coordinate such information and other information with input/output devices that are part of cellular phone 100 such as a speaker, keyboard (keys), and an amplifier.

Processor 120 interfaces through a bidirectional bus 122 with cellular phone memory 125. Memory 125 may include information such as saved contact information (e.g., addresses, phone numbers, and e-mail addresses). Memory 125 may also include stored text and/or graphic messages. Memory 125 includes a dedicated section of memory, printing configuration memory 130. Parameters describing a particular printer are stored in printing configuration memory 130. Processor 120 may change printing configuration memory 130 through one of various methods, including direct user intervention and receipt of a message.

The architecture of cellular phone 100 further includes an input/output (I/O) bus 135 that couples to various interfaces and devices. In this example, I/O bus 135 couples to a keypad interface 140 that provides connection to a cellular phone keypad 145, and to screen interface 150 that provides connection to a cellular phone screen 155. I/O bus 135 further couples to a cradle interface 160. Cradle interface 160 connects to a cradle 165 that is operatively coupled to the cellular phone 100. Cradle 165 connects to a software downloading device such as disk drive 170 which is configured to receive recordable medium such as a floppy disk 175 or an optical disk 180. This allows software to be downloaded to cellular phone 100. Alternatively, software may also be downloaded through receipt by transceiver 105 and processing by A/D converter 115.

### Exemplary Message Network Environment

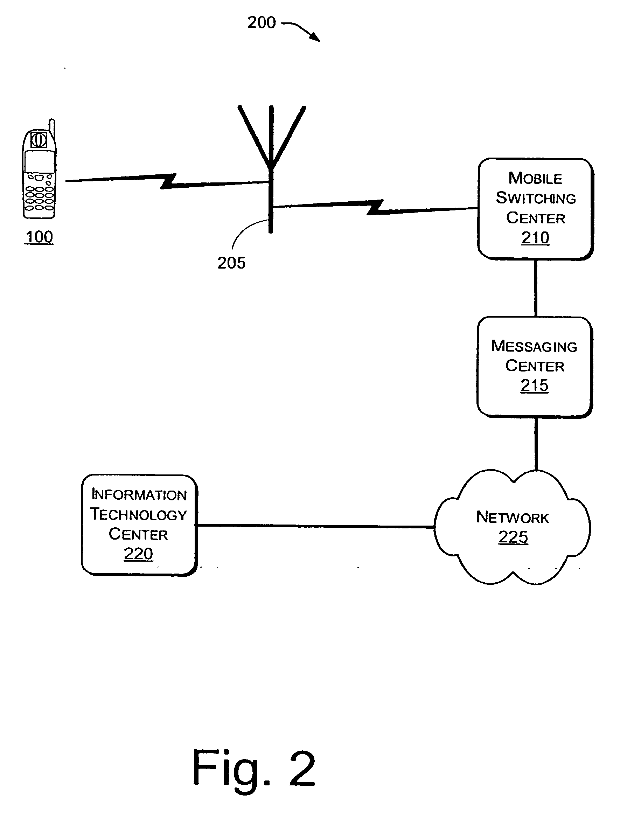

Fig. 2 shows an exemplary cellular phone network 200 that passes messages to cellular phone 100. Cellular phone 100 is part of a cellular phone network 200. Cellular phone network 200 may include numerous base stations that receive and transmit RF signal messages, such as base station 205. Cellular phone network further includes a mobile switching center 210 that determines the location of cellular phone 100 and the location of the nearest base station to cellular phone 100. Messaging center 215 is operatively connected through a landline or wireless connection to mobile switching center 210. Messaging center 215 receives and stores any messages (e.g., text) that are to be made available on the cellular phone network 200.

An information technology (IT) center 220 may be connected through a landline or wireless connection to messaging center 215 by a network 225. IT center 220 may include a computer and/or a network of computers. Network 225 includes wide area networks (WANs), wireless area networks, and the Internet. An example operating scenario provides for the IT center 220 to send a message through network 225 to messaging center 215 where the message is stored. Alternatively, IT center 220 may also send out a wireless message that is transmitted and picked up by a base station, such as base station 205, then passed on to messaging center 215 through mobile switching center 210.

IT center 220 may be part of a corporate wide network that configures and tracks devices such as cellular phone 100. Configuration of cellular phone 100 includes printer configurations that allow cellular phone 100 to print to various printers and printing devices. It is also contemplated that IT center 220 may be a service provider that provides cellular phone users various services, including the option to print to particular printers by providing the necessary configuration information. An example of such a service provider is a service that allows cell phone users to print from "public" printers at locations such as airports, coffee houses, and public buildings. An example operating scenario provides that a cell phone user contact IT center 220 and IT center 220 determines the location of cell phone 100 and the nearest printers, then provides cell phone 100 with the necessary configuration information to print to the particular printer(s).

In an embodiment, IT center 220 determines where cellular phone 100 is through the cellular network 200, in particular through mobile switching center 210, and determines the location of available printers and/or networks to which cellular phone 100 can connect. Locations of printers and/or networks may be obtained by IT center 220 through a database maintained by IT center 220. IT center 220 provides cellular phone 100 with the configuration information that allows cellular phone 100 to print to the available printers. Referring back to Fig. 1, cellular phone 100, configures printer configuration memory 130 with the provided information to print to the available printers.

### Exemplary Printing Environment

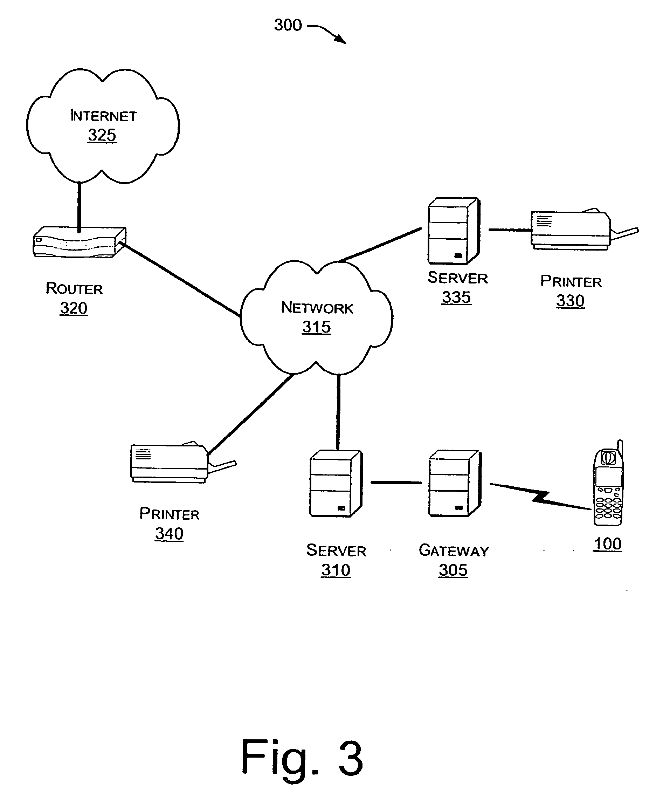

Fig. 3 shows an exemplary network system 300 that allows cellular phone 100 to print to a printer or printing device. Cellular phone 100 is part of network system 300. In an embodiment, cellular phone 100 connects to the network system by way of a wireless gateway computer 305 that is configured through hardware, software, or a combination to receive wireless communication (e.g., RF or infrared signals) from cellular phone 100.

Gateway computer 305 is configured through hardware, software, or a combination to receive transmission from various wireless devices in addition to cellular phone 100. Gateway computer 305 is connected to server 310. Server 310 receives and stores messages, data files, and other communications. In addition, server 310 may transmit messages, data files, and communications through gateway computer 305.

Server 310 is connected to a network 315. Network 315 may be one of several types of hardwired and wireless networks, including wireless area networks, wide area networks, local area networks, and personal area networks. Network 315 may also include a router 320 that allows network 315 and devices connected to network 315 to connect to the Internet 325 and/or other networks.

Through network 315, server 310 is able to connect to devices such as printer 330. Printer 330 may include devices such as laser-based printers, ink-based printers, dot matrix printers, dry medium printers, plotters and the like. In addition, printer 330 might also include various multi-function peripheral (MFP) devices that combine a printing function with other functions such as facsimile transmission, scanning, copying and the like.

Alternatively, network system 300 provides a server 335 that may store and queue printing jobs, in this case printing jobs for printer 340. Printer 340, like printer 330, includes the various types of printing devices as described above.

### Exemplary Methods

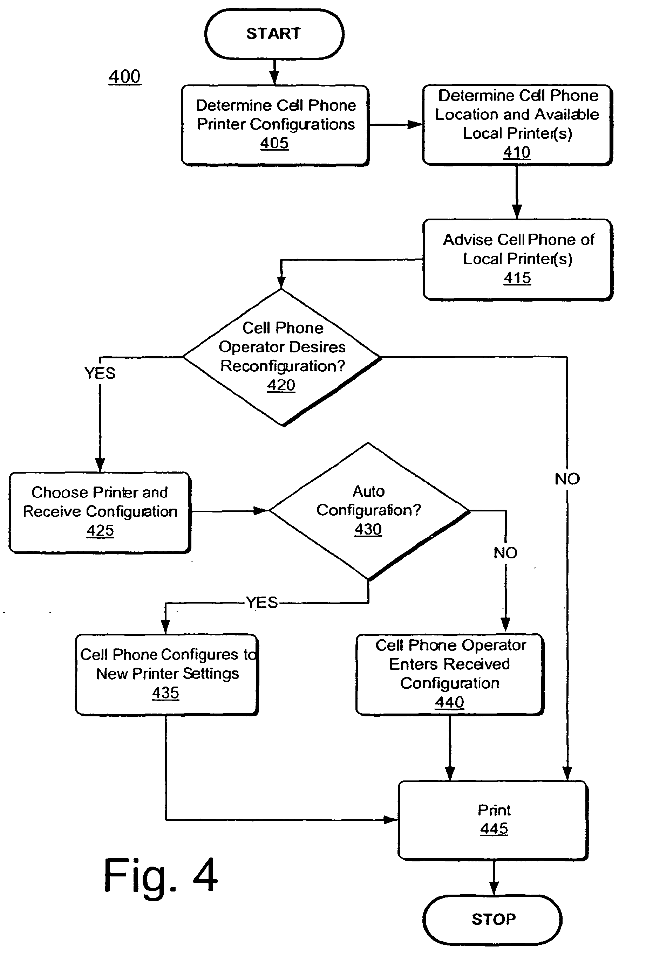

Fig. 4 is a flowchart illustrating configuring a cellular phone to a particular printer. At block 405, the cellular phone 100 determines its printer configuration. In certain cases, the cellular phone 100 may not need to change printer configuration and the user is able to print to a desired printer. Printer configuration may include one of several fields or attributes that are used to print to particular printers. These fields or attributes include "printer name," "printer address," "printer location," and other unique printer feature fields or attributes.

At block 410, IT center 220 through mobile switching center 210 may be able to determine where the cellular phone 100 is located. Knowing where the cellular phone 100 is located, the IT center 220 can determine local networks that allow the cellular phone 100 to print to particular printer(s) located on a local network such as local network 315. The IT center 220 will have the necessary printer configuration settings to provide to the cellular phone 100 to allow the cellular phone 100 to connect to local network 315 and to print to the printers such as printer 330 and printer 340.

At block 415, the IT center 220 may proactively advise the cellular phone 100 that a network 315 is available that allows the cellular phone to print. Alternatively, the cellular phone 315 user may contact the IT center with an initial inquiry as to the availability of networks and printers in the area.

At block 420, a determination is made as to whether the cellular phone 100 user desires to reconfigure the printer settings of the cellular phone 100. In certain situations there is not a need or a desire to reconfigure to print to a local printer. These situations include transitory visits to a network where the cellular phone 100 user does not need to conduct any printing. In these cases, the current printer configurations of the cellular phone 100 are kept and not changed.

At block 425, if the cellular phone 100 user desires to print to a local printer, the cellular phone user advises the IT center 220. The network that the user connects to may have several printers available (e.g., printers 330 and 340), therefore the cellular phone 100 user either chooses one or more printers to print from. The IT center 220 provides a message that contains the configuration information to modify the cellular phone 100 to print to one or more printers (e.g., printers 330 and 340). Although several printer configurations may be received, the cell phone 100 user is expected to choose one printer configuration and to print from one particular printer (e.g., printer 330 or 340).

At block 430, a determination is made if the cellular phone 100 is set up for automatic configuration to change printer settings. Cellular phone 100 may receive printer configuration in the form of text messages which provide the parameters to fill particular memory locations in printer configuration memory 130.

For certain cellular phones, either through software or hardware, memory locations in printer configuration memory 130 are automatically updated with the necessary parameters when a user desires to change printer configuration. The user merely accepts the printer configuration changes and the parameters are added to the appropriate fields. At block 435, the cellular phone 100 automatically configures to the new printer settings.

If cellular phone 100 is not equipped with software or hardware that automatically enters printer configuration parameters, a user may copy the text messages into the appropriate memory locations of printer configuration memory 130. A user merely selects the appropriate parameter information from the text message, copies it, and then pastes it in the appropriate field, as illustrated by block 440. This avoids the need to retype the configuration parameters using the small keys of the cellular phone.

At block 445, the user is able to print from the cellular phone 100 using based on the configuration parameters that define the particular printer.

Although details of specific implementations and embodiments are described above, such details are intended to satisfy statutory disclosure obligations rather than to limit the scope of the following claims. Thus, the invention as defined by the claims is not limited to the specific features described above. Rather, the invention is claimed in any of its forms or modifications that fall within the proper scope of the appended claims, appropriately interpreted.

## Claims

1. A system (300) comprising:
a cellular phone (100) for communicating over a cellular network configured to print to a printer (330, 340) in accordance with received configuration information;
an IT center (220) connected to the cellular network and configured to locate the cellular phone (100) and transmit configuration information of a printer located on a network (315) in the vicinity of the cellular phone to the cellular phone;
a gateway computer (305) connectable wirelessly to the cellular phone and further connected to the network (315); and
a pointer connected to the network (315) and configured to receive data from the cellular phone (100) via the gateway computer (305).

2. A method comprising:
with an IT center, locating a cellular phone which communicates over a cellular network;
with the IT center, determining a local printer connected to a network, the network being connectable with wireless communication via a gateway computer to the cellular phone;
transmitting configuration information to the cellular phone to configure printing to the local printer;
receiving the configuration information at the cellular phone;
storing the configuration information in dedicated memory in the cellular phone; configuring the cellular phone to print to the printer via the gateway computer based on the configuration information; and
transmitting data to be printed on the printer from the cellular phone through the gateway computer using said wireless communication.

3. The method of claim 2, wherein the configuration information comprises printer name, printer address, and printer location.

4. The method of claim 2 or claim 3, wherein receiving configuration information is performed through a short message service.

## Patentansprüche

1. Ein System (300), das folgende Merkmale umfasst:
ein Mobiltelefon (100) zum Kommunizieren über ein zellulares Netzwerk, das konfiguriert ist, um gemäß empfangener Konfigurationsinformationen an einem Drucker (330, 340) zu drucken;
ein IT-Zentrum (220), das mit dem zellularen Netzwerk verbunden ist, und konfiguriert ist, um das Mobiltelefon (100) zu lokalisieren und Konfigurationsinformationen eines Druckers, der auf einem Netzwerk (315) in der Nähe des Mobiltelefons angeordnet ist, zu dem Mobiltelefon zu übertragen;
einen Netzübergangscomputer (305), der drahtlos mit dem Mobiltelefon verbindbar ist und ferner mit dem Netzwerk (315) verbunden ist; und
einen Drucker, der mit dem Netzwerk (315) verbunden ist und konfiguriert ist, um Daten von dem Mobiltelefon (100) über den Netzübergangscomputer (305) zu empfangen.

2. Ein Verfahren, das folgende Schritte umfasst:
mit einem IT-Zentrum, Lokalisieren eines Mobiltelefons, das über ein zellulares Netzwerk kommuniziert;
mit dem IT-Zentrum, Bestimmen eines lokalen Druckers, der mit einem Netzwerk verbunden ist, wobei das Netzwerk mit drahtloser Kommunikation über einen Netzübergangscomputer mit dem Mobiltelefon verbindbar ist;
Senden von Konfigurationsinformationen an das Mobiltelefon, um Drucken an dem lokalen Drucker zu konfigurieren;
Empfangen der Konfigurationsinformationen an dem Mobiltelefon;
Speichern der Konfigurationsinformationen in zweckgebundenem Speicher in dem Mobiltelefon;
Konfigurieren des Mobiltelefons, um an dem Drucker zu drucken, über den Netzübergangscomputer, basierend auf den Konfigurationsinformationen; und
Senden von Daten, die auf dem Drucker zu drucken sind, von dem Mobiltelefon durch den Netzübergangscomputer unter Verwendung der drahtlosen Kommunikation.

3. Das Verfahren gemäß Anspruch 2, bei dem die Konfigurationsinformationen Druckername, Druckeradresse und Druckerposition umfassen.

4. Das Verfahren gemäß Anspruch 2 oder Anspruch 3, bei dem das Empfangen von Konfigurationsinformationen durch einen Kurzmitteilungsdienst durchgeführt wird.

## Revendications

1. Système (300) comportant :
➢ un téléphone cellulaire (100) destiné à une communication dans un réseau cellulaire configuré pour imprimer sur une imprimante (330, 340) selon des informations de configuration reçues ;
➢ un centre informatique (IT) (220) connecté au réseau cellulaire et configuré de manière à localiser le téléphone cellulaire (100) et à transmettre des informations de configuration, d'une imprimante localisée dans un réseau (315) à proximité du téléphone cellulaire, au téléphone cellulaire ;
➢ un ordinateur passerelle (305) pouvant être connecté sans fil au téléphone cellulaire et connecté en outre au réseau (315) ; et
➢ une imprimante connectée au réseau (315) et configurée de manière à recevoir des données en provenance du téléphone cellulaire (100) via l'ordinateur passerelle (305).

2. Procédé comportant les étapes ci-dessous consistant à :
➢ avec un centre informatique (IT), localiser un téléphone cellulaire qui communique dans un réseau cellulaire ;
➢ avec un centre informatique (IT), déterminer une imprimante locale connectée à un réseau, le réseau pouvant être connecté, par le biais d'une communication sans fil, via un ordinateur passerelle, au téléphone cellulaire ;
➢ transmettre des informations de configuration au téléphone cellulaire de manière à configurer l'impression vers l'imprimante locale ;
➢ recevoir les informations de configuration au niveau du téléphone cellulaire ;
➢ stocker les informations de configuration dans une mémoire dédiée au sein du téléphone cellulaire ;
➢ configurer le téléphone cellulaire de manière à imprimer sur l'imprimante via l'ordinateur passerelle sur la base des informations de configuration ; et
➢ transmettre les données à imprimer sur l'imprimante à partir du téléphone cellulaire, via l'ordinateur passerelle, en faisant appel à ladite communication sans fil.

3. Procédé selon la revendication 2, dans lequel les informations de configuration incluent le nom de l'imprimante, l'adresse de l'imprimante et la localisation de l'imprimante.

4. Procédé selon la revendication 2 ou 3, dans lequel l'étape de réception des informations de configuration est mise en oeuvre via un service de messages courts.
